# EUROPEAN PATENT APPLICATION

(11) **EP 3 208 499 A1**
(43) Date of publication of application: **23.08.2017**
(21) Application number: 17156419.8
(22) Date of filing: 16.02.2017
(51) Int. Cl.: F16J 15/3208

(54) **SEALING DEVICE AND SEALING STRUCTURE**

(30) Priority: 17.02.2016 JP 2016027631
(71) Applicant: Carl Freudenberg KG, 69469 Weinheim (DE)
(72) Inventor: Masatoshi, Seki, Ibaraki, 319-1535 (JP)

(57) **Abstract**

To provide a sealing device and a sealing structure capable of increasing sealability and fulfilling a sealing function even in a low fluid pressure state.

Including a first sealing ring 100 having an endless shape and made of a resin, the first sealing ring 100 being closely attached to a sidewall surface of an annular groove 310 on a low-pressure side (L), the first sealing ring 100 being configured to slide with respect to an inner circumferential surface of a housing 400 through which a shaft 300 is inserted, and a second sealing ring 200 made of a rubbery elastic body, the second sealing ring 200 being closely attached to the sidewall surface and a groove bottom surface of the annular groove 310 on a high-pressure side (H), as well as to the first sealing ring 100, wherein a side surface of the first sealing ring 100 on the high-pressure side (H) includes an inner circumferential surface-side inclined surface 131 reduced in diameter toward the low-pressure side (L) from the high-pressure side (H), and the second sealing ring 200 is arranged to press the inner circumferential surface-side inclined surface 131.

## Description

The present invention relates to a sealing device and a sealing structure for sealing an annular gap between a shaft and a shaft hole of a housing.

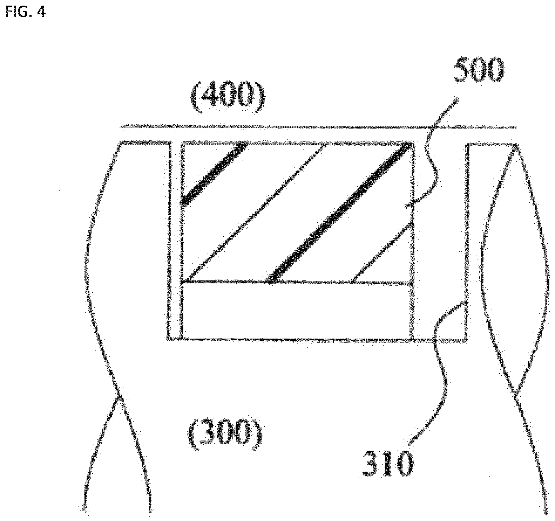

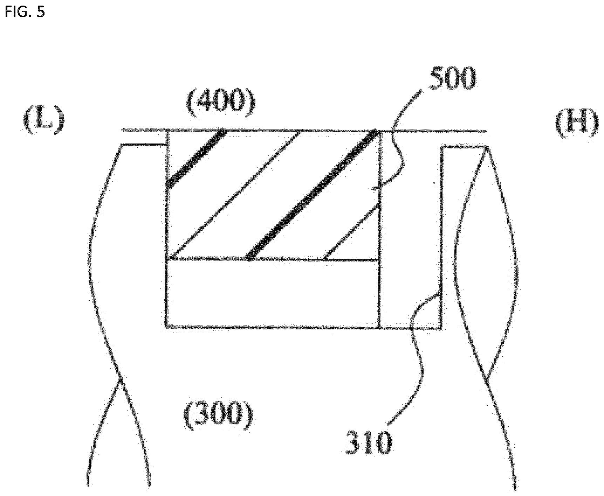

In an automatic transmission (AT) or continuously variable transmission (CVT) for automobiles, a sealing device (sealing ring) for sealing an annular gap between a shaft and a housing that rotate relatively is provided to maintain the hydraulic pressure. A sealing ring according to a conventional example is described with reference to FIGS. 4 and 5. FIG. 4 is a schematic cross-sectional view illustrating a state where hydraulic pressure is not maintained with the sealing ring according to the conventional example. FIG. 5 is a schematic cross-sectional view illustrating a state where hydraulic pressure is maintained with the sealing ring according to the conventional example. A sealing ring 500 according to the conventional example is configured such that the sealing ring 500 is attached to an annular groove 310 provided on an outer circumference of a shaft 300 and slidably contacts both an inner circumferential surface of a shaft hole of a housing 400 through which the shaft 300 is inserted and a sidewall surface of the annular groove 310 so as to seal an annular gap between the shaft 300 and the shaft hole of the housing 400.

The sealing ring 500 used for the aforementioned intended purpose requires a sufficiently reduced sliding torque. Therefore, the circumferential length of the outer circumferential surface of the sealing ring 500 is configured to be shorter than the circumferential length of the inner circumferential surface of the shaft hole of the housing 400, and is configured not to include a tightening margin. Accordingly, in a state where an engine of an automobile is started and the hydraulic pressure is increased, the sealing ring 500 is increased in diameter by the hydraulic pressure and is closely attached to the inner circumferential surface of the shaft hole and the sidewall surface of the annular groove 310, thus fulfilling a function of sufficiently maintaining the hydraulic pressure (see FIG. 5). In a state where the hydraulic pressure is not applied due to the stoppage of the engine, the sealing ring 500 is configured to be brought into a state where the sealing ring 500 is separate from the inner circumferential surface of the shaft hole or the sidewall surface of the annular groove 310 (see FIG. 4).

The sealing ring 500 often includes a joint portion at a single location in a circumferential direction in order to increase an attachment property to the annular groove 310. As a structure of the joint portion, a special step cut that provides stable sealability even in the case of thermal expansion or contraction is known (see Patent Literature 1). However, even the special step cut cannot positively prevent leakage of sealing target fluid, and a further increase in sealability is needed.

In addition, in the case of the sealing ring 500 configured in the aforementioned manner, the sealing function is not fulfilled in a state where a hydraulic pressure is not applied. Therefore, with a configuration in which speed change is controlled by an oil pumped by a hydraulic pump, e.g., an AT or CVT, in a no-load state (e.g., during idle reduction) where the hydraulic pump is stopped, the oil that has been sealed by the sealing ring 500 is unsealed and returns to the oil pan, thus resulting in a loss of oil from the vicinity of the sealing ring 500. Accordingly, when the engine is started (restarted) in the aforementioned state, the operation begins in an unlubricated state where oil is not present in the vicinity of the sealing ring 500, and the responsiveness or operability can be reduced. Therefore, there is room for improvement.

### Patent Literature

JP Pat. Appl. Publ. No. 2002-372154

It is an object of the present invention to provide a sealing device and a sealing structure capable of increasing the sealability and fulfilling a sealing function even in a low fluid pressure state.

The present invention employs the following means to solve the aforementioned problem.

Specifically, a sealing device of the present invention is attached to an annular groove provided on an outer circumference of a shaft, the sealing device being configured to seal an annular gap between the shaft and a housing that rotate relatively, and to maintain a fluid pressure of a sealing target region configured such that a fluid pressure varies,
the sealing device including:
   a first sealing ring having an endless shape and made of a resin, the first sealing ring being closely attached to a sidewall surface of the annular groove on a low-pressure side, the first sealing ring being configured to slide with respect to an inner circumferential surface of a shaft hole of the housing through which the shaft is inserted; and
   a second sealing ring made of a rubbery elastic body, the second sealing ring being closely attached to the sidewall surface and a groove bottom surface of the annular groove on a high-pressure side, as well as to the first sealing ring,
   wherein
   a side surface of the first sealing ring on the high-pressure side includes an inclined surface reduced in diameter toward the low-pressure side from the high-pressure side, and the second sealing ring is arranged to press the inclined surface.

In addition, a sealing structure of the present invention includes:
a shaft and a housing that rotate relatively; and
a sealing device attached to an annular groove provided on an outer circumference of the shaft, the sealing device being configured to seal an annular gap between the shaft and the housing and to maintain a fluid pressure of a sealing target region configured such that a fluid pressure varies, sealing device including:
   a first sealing ring having an endless shape and made of a resin, the first sealing ring being closely attached to a sidewall surface of the annular groove on a low-pressure side, the first sealing ring being configured to slide with respect to an inner circumferential surface of a shaft hole of the housing through which the shaft is inserted, and
   a second sealing ring made of a rubbery elastic body, the second sealing ring being closely attached to the sidewall surface and a groove bottom surface of the annular groove on a high-pressure side, as well as to the first sealing ring,
wherein
a side surface of the first sealing ring on the high-pressure side includes an inclined surface reduced in diameter toward the low-pressure side from the high-pressure side is formed, and the second sealing ring is arranged to press the inclined surface.

According to the present invention, the first sealing ring made of a resin has an endless shape. Therefore, unlike the case of a resin sealing ring having a joint portion, the problem of leakage of a sealing target fluid through a joint portion does not occur. Furthermore, the second sealing ring is arranged to press the inclined surface (an inclined surface that is reduced in diameter toward the low-pressure side from the high-pressure side) provided at a side surface of the first sealing ring on the high-pressure side. Accordingly, the first sealing ring is pressed by the second sealing ring to the low-pressure side and a radially outer side. Thus, even in a state where no fluid pressure is exerted (no pressure difference is generated) or almost no fluid pressure is exerted (almost no pressure difference is generated), the first sealing ring can be brought into a state where the first sealing ring is in contact with both the sidewall surface of the annular groove on the low-pressure side and the inner circumferential surface of the shaft hole of the housing. Accordingly, since the sealing function is fulfilled, the fluid pressure can be maintained from immediately after the beginning of an increase in fluid pressure of the sealing target region.

It is preferable that a closely attached area between the sidewall surface of the annular groove on the low-pressure side and the first sealing ring is greater than a sliding area between the inner circumferential surface of the shaft hole and the first sealing ring.

Thus, by allowing sliding between the first sealing ring and the inner circumferential surface of the shaft hole of the housing, sliding between the first sealing ring and the sidewall surface of the annular groove on the low-pressure side can be suppressed.

It is preferable that the side surface of the first sealing ring on the high-pressure side is includes the inclined surface provided on a radially inner side and an outer circumferential surface-side inclined surface provided on a radially outer side and increased in diameter toward the low-pressure side from the high-pressure side.

Thus, the area of the outer circumferential surface of the first sealing ring can be reduced, enabling a reduction in sliding resistance between the first sealing ring and the inner circumferential surface of the shaft hole of the housing.

As described heretofore, the present invention is capable of increasing the sealability and fulfilling the sealing function even in a low fluid pressure state.
FIG. 1 is a side view of a first sealing ring according to an embodiment of the present invention.
FIG. 2 is a side view of a second sealing ring according to an embodiment of the present invention.
FIG. 3 is a schematic cross-sectional view illustrating a state where a sealing structure according to an embodiment of the present invention is in use.
FIG. 4 is a schematic cross-sectional view illustrating a state where a sealing device (sealing ring) according to a conventional example is in use.
FIG. 5 is a schematic cross-sectional view illustrating a state where a sealing device (sealing ring) according to a conventional example is in use.

A mode of carrying out the present invention is exemplarily described in detail below on the basis of an embodiment with reference to the drawings. However, dimensions, materials, shapes and relative arrangements of components described in the embodiment are not for the purpose of limiting the scope of the present invention thereto unless otherwise specified. A sealing device and a sealing structure according to the present embodiment are used for sealing an annular gap between a shaft and a housing that rotate relatively, in order to maintain the hydraulic pressure in a transmission, e.g., an AT and a CVT, for automobiles. In addition, in the following description, a "high-pressure side" means a side that is subject to a high pressure when a pressure difference is generated between both sides of the sealing device, and a "low-pressure side" means a side that is subject to a low pressure when a pressure difference is generated between both sides of the sealing device.

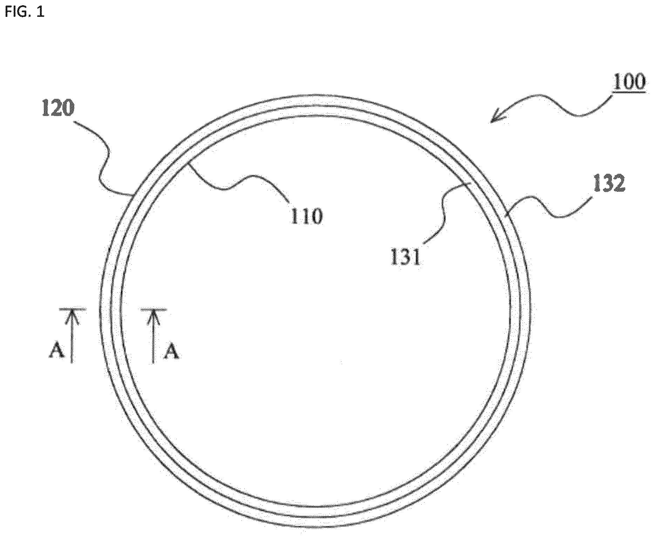

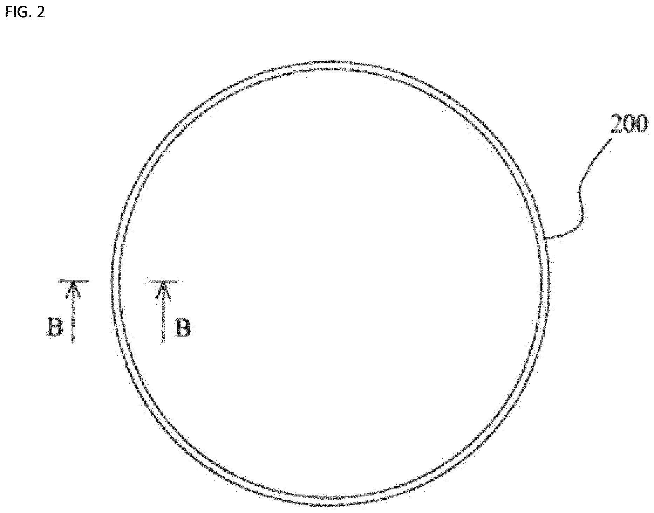

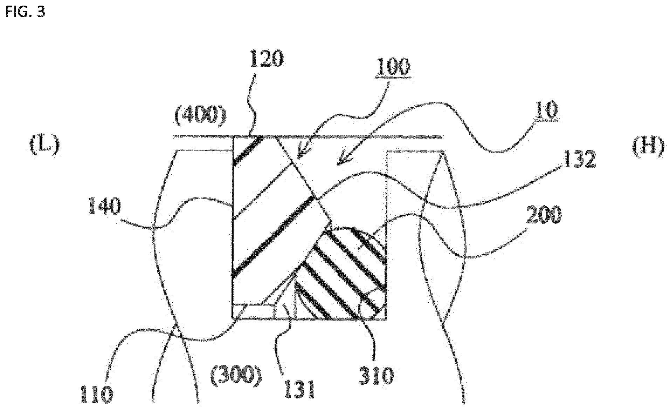

A sealing device and a sealing structure according to an embodiment of the present invention are described with reference to FIGS. 1 to 3. FIG. 1 is a side view of a first sealing ring constituting the sealing device according to the embodiment of the present invention. FIG. 2 is a side view of a second sealing ring constituting the sealing device according to the embodiment of the present invention. FIG. 3 is a schematic cross-sectional view illustrating a state where the sealing structure according to the embodiment of the present invention is in use. The first sealing ring in FIG. 3 corresponds to a cross-sectional view taken along line A-A of FIG. 1, and the second sealing ring in FIG. 3 corresponds to a cross-sectional view taken along line B-B of FIG. 2.

Configurations of the sealing device and the sealing structure according to the embodiment of the present invention are described. The sealing structure according to the present embodiment includes a shaft 300 and a housing 400 that rotate relatively, as well as a sealing device 10 configured to seal an annular gap between the shaft 300 and the housing 400 (an inner circumferential surface of a shaft hole of the housing 400 through which the shaft 300 is inserted). The sealing device 10 according to the present embodiment is attached to an annular groove 310 provided on an outer circumference of the shaft 300 and is configured to seal an annular gap between the shaft 300 and the housing 400 that rotate relatively. Thus, the sealing device 10 maintains a fluid pressure of a sealing target region which is configured such that a fluid pressure varies (hydraulic pressure in the present embodiment). In the present embodiment, the fluid pressure in the right-hand region in FIG. 3 is configured to vary, and the sealing device 10 plays a role in maintaining the fluid pressure of the sealing target region on the right-hand side in the drawing. In a state where the engine of an automotive engine is stopped, the fluid pressure of the sealing target region is low and a no-load state is provided. When the engine is started, the fluid pressure of the sealing target region increases.

Furthermore, the sealing device 10 according to the present embodiment includes a first sealing ring 100 having an endless shape and made of a resin and a second sealing ring 200 made of a rubbery elastic body. Examples of the material of the first sealing ring 100 include polytetrafluoroethylene (PTFE), polyetheretherketone (PEEK), and polyphenylenesulfide (PPS). In addition, examples of the material of the second sealing ring 200 include acrylic rubber (ACM), fluororubber (FKM), hydrogenated nitrile rubber (HNBR), nitrile rubber (NBR), ethylenepropylene rubber (EPDM), silicone rubber (VMQ), fluorosilicone rubber (FVMQ), chloroprene rubber (CR), butyl rubber (IIR), styrene-butadiene rubber (SBR), and urethane rubber (AU).

Each of an inner circumferential surface 110 and an outer circumferential surface 120 of the first sealing ring 100 is a cylindrical surface. Under no external force, an inner diameter of the first sealing ring 100 is configured to be greater than an outer diameter of a groove bottom surface of the annular groove 310. However, the first sealing ring 100 may be configured such that the inner circumferential surface 110 is closely attached to the groove bottom surface of the annular groove 310 when in use. In addition, a circumferential length of the outer circumferential surface 120 of the first sealing ring 100 is configured to be shorter than a circumferential length of the inner circumferential surface of the shaft hole of the housing 400. Specifically, under no external force, an outer diameter of the first sealing ring 100 is configured to be smaller than an inner diameter of the shaft hole of the housing 400.

In addition, a side surface of the first sealing ring 100 on the high-pressure side (H) includes an inner circumferential surface-side inclined surface 131 provided on a radially inner side and an outer circumferential surface-side inclined surface 132 provided on a radially outer side. The inner circumferential surface-side inclined surface 131 includes an inclined surface that is reduced in diameter toward the low-pressure side (L) from the high-pressure side (H). In the present embodiment, the inclined surface is a tapered surface, but it is also possible to employ an inclined surface having a curved line cross-sectional shape when taken along a plane including a central axis. The outer circumferential surface-side inclined surface 132 includes an inclined surface that is increased in diameter toward the low-pressure side (L) from the high-pressure side (H). This inclined surface also includes a tapered surface, but it is also possible to employ an inclined surface having a curved line cross-sectional shape when taken along a plane including the central axis. A side surface 140 of the first sealing ring 100 on the low-pressure side (L) includes a plane perpendicular to the central axis.

Furthermore, the first sealing ring 100 is designed such that a closely attached area between a sidewall surface of the annular groove 310 on the low-pressure side (L) and the first sealing ring 100 is greater than a sliding area between the inner circumferential surface of the shaft hole of the housing 400 and the first sealing ring 100.

The second sealing ring 200 according to the present embodiment is an O-ring having a circular shape in cross-section. Furthermore, the second sealing ring 200 is arranged to be closely attached to both the sidewall surface and the groove bottom surface of the annular groove 310 on the high-pressure side (H), and the inner circumferential surface-side inclined surface 131 of the first sealing ring 100, so as to press the inner circumferential surface-side inclined surface 131. The second sealing ring 200 is not limited to an O-ring, but other rubber sealing rings are also applicable. For example, a D-ring having a D shape in cross-section, an oval ring having an oval shape in cross-section, and an X-ring having an X shape in cross-section are applicable.

The mechanism of the sealing device 10 in use according to the present embodiment is described particularly with reference to FIG. 3. FIG. 3 illustrates a state where an engine is started and the fluid pressure in the right-hand region is greater than that in the left-hand region via the sealing device 10.

As described above, under no external force, the outer diameter of the first sealing ring 100 is configured to be smaller than the inner diameter of the shaft hole of the housing 400. However, the inner circumferential surface-side inclined surface 131 of the first sealing ring 100 is pressed by the second sealing ring 200. Accordingly, the first sealing ring 100 is pressed by the second sealing ring 200 toward the low-pressure side (L) and the radially outer side. Thus, the first sealing ring 100 is kept in contact with the sidewall surface of the annular groove 310 formed on the shaft 300 on the low-pressure side (L) and the inner circumferential surface of the shaft hole of the housing 400.

With the sealing device 10 configured in the aforementioned manner, a state in which the annular gap between the shaft 300 and the housing 400 is sealed is maintained even in a state where the engine is stopped and there is no pressure difference between both sides via the sealing device 10 (no-load state). Furthermore, even in a state where the engine is started and the fluid pressure in the right-hand region is greater than that in the left-hand region via the sealing device 10, there is almost no change in arrangements of the first sealing ring 100 and the second sealing ring 200. Accordingly, the annular gap between the shaft 300 and the housing 400 is kept in a sealed state. In addition, during relative rotation of the shaft 300 and the housing 400, the first sealing ring 100 is kept in a closely attached state to the side surface of the annular groove 310 on the low-pressure side (L), and there is a sliding between the first sealing ring 100 and the inner circumferential surface of the shaft hole of the housing 400, where the contact area is small.

In the sealing device 10 according to the present embodiment, the first sealing ring 100 made of a resin has an endless shape. Therefore, unlike the case of a resin sealing ring having a joint portion, the problem of leakage of a sealing target fluid through a joint portion does not occur. Furthermore, the second sealing ring 200 is arranged to press the inner circumferential surface-side inclined surface 131, which is provided at the side surface of the first sealing ring 100 on the high-pressure side (H). Accordingly, the first sealing ring 100 is pressed by the second sealing ring 200 toward the low-pressure side (L) and the radially outer side. Thus, even in a state where no fluid pressure is exerted (no pressure difference is generated) or almost no fluid pressure is exerted (almost no pressure difference is generated), the first sealing ring 100 can be brought into a state where the first sealing ring 100 is in contact with both the sidewall surface of the annular groove 310 on the low-pressure side (L) and the inner circumferential surface of the shaft hole of the housing 400. Accordingly, since the sealing function is fulfilled, the fluid pressure can be maintained from immediately after the beginning of an increase in fluid pressure of the sealing target region.

Specifically, in the case of an engine with an idle reduction function, by pressing an accelerator pedal to start the engine from an engine stop state, the hydraulic pressure can be maintained from immediately after the beginning of an increase in hydraulic pressure on the sealing target region side. Generally, a resin sealing ring hardly fulfills the function of suppressing fluid leakage. However, the sealing device 10 according to the present embodiment keeps the annular gap between the shaft 300 and the housing 400 in a sealed state even in a no-load state. Therefore, the function of sufficiently suppressing fluid leakage is fulfilled. Therefore, even after the operation, e.g., of the pump, is stopped by the stoppage of the engine, the state where a pressure difference is generated can be maintained for some time. Accordingly, in the case of an engine with an idle reduction function, when an engine stop state is brief, a state where a pressure difference is generated can be maintained. Therefore, when the engine is restarted, the fluid pressure can be suitably maintained from immediately thereafter.

The sealing structure according to the present embodiment is designed such that the closely attached area between the sidewall surface of the annular groove 310 on the low-pressure side (L) and the first sealing ring 100 is greater than the sliding area between the inner circumferential surface of the shaft hole of the housing 400 and the first sealing ring 100. Thus, by allowing sliding between the first sealing ring 100 and the inner circumferential surface of the shaft hole of the housing 400, sliding between the first sealing ring 100 and the sidewall surface of the annular groove 310 on the low-pressure side (L) can be suppressed. Thus, sliding between the first sealing ring 100 and the second sealing ring 200 can be suppressed.

In addition, the side surface of the first sealing ring 100 on the high-pressure side (H) according to the present embodiment includes the inner circumferential surface-side inclined surface 131 provided on a radially inner side and the outer circumferential surface-side inclined surface 132 provided on a radially outer side. Thus, while providing the inner circumferential surface-side inclined surface 131 to which the second sealing ring 200 is closely attached to press the first sealing ring 100, the area of the outer circumferential surface 120 of the first sealing ring 100 can be reduced. Accordingly, sliding resistance between the first sealing ring 100 and the inner circumferential surface of the shaft hole of the housing 400 can be reduced.

However, when the sliding resistance between the first sealing ring 100 and the inner circumferential surface of the shaft hole of the housing 400 can be reduced sufficiently, the outer circumferential surface-side inclined surface 132 is not always necessary. In addition, the present embodiment indicates the case where the inner circumferential surface-side inclined surface 131 is provided over a range from the vicinity of the center in the radial direction to the inner circumferential surface 110. However, the position where the inner circumferential surface-side inclined surface 131 is provided is not particularly limited. The position where the inner circumferential surface-side inclined surface 131 is provided may be determined as appropriate as long as the first sealing ring 100 is pressed toward the low-pressure side (L) and the radially outer side by being pressed by the second sealing ring 200.

## Claims

1. A sealing device attached to an annular groove provided on an outer circumference of a shaft, the sealing device being configured to seal an annular gap between the shaft and a housing that rotate relatively and to maintain a fluid pressure of a sealing target region configured such that the fluid pressure varies, the sealing device comprising: a first sealing ring having an endless shape and made of a resin, the first sealing ring being closely attached to a sidewall surface of the annular groove on a low-pressure side, the first sealing ring being configured to slide with respect to an inner circumferential surface of a shaft hole of the housing through which the shaft is inserted; and a second sealing ring made of a rubbery elastic body, the second sealing ring being closely attached to the sidewall surface and a groove bottom surface of the annular groove on a high-pressure side as well as to the first sealing ring; wherein a side surface of the first sealing ring on the high-pressure side includes an inclined surface reduced in diameter toward the low-pressure side from the high-pressure side, and the second sealing ring is arranged to press the inclined surface.

2. The sealing device according to claim 1, wherein a closely attached area between the sidewall surface of the annular groove on the low-pressure side and the first sealing ring is greater than a sliding area between the inner circumferential surface of the shaft hole and the first sealing ring.

3. The sealing device according to claim 1 or 2, wherein the side surface of the first sealing ring on the high-pressure side includes the inclined surface provided on a radially inner side and an outer circumferential surface-side inclined surface which is provided on a radially outer side and increased in diameter toward the low-pressure side from the high-pressure side.

4. A sealing structure comprising: a shaft and a housing that rotate relatively; and a sealing device attached to an annular groove provided on an outer circumference of the shaft, the sealing device being configured to seal an annular gap between the shaft and the housing and to maintain a fluid pressure of a sealing target region configured such that the fluid pressure varies, the sealing device including: a first sealing ring having an endless shape and made of a resin, the first sealing ring being closely attached to a sidewall surface of the annular groove on a low-pressure side, the first sealing ring being configured to slide with respect to an inner circumferential surface of a shaft hole of the housing through which the shaft is inserted, and a second sealing ring made of a rubbery elastic body, the second sealing ring being closely attached to the sidewall surface and a groove bottom surface of the annular groove on a high-pressure side, as well as to the first sealing ring, wherein a side surface of the first sealing ring on the high-pressure side includes an inclined surface reduced in diameter toward the low-pressure side from the high-pressure side, and the second sealing ring is arranged to press the inclined surface.

5. The sealing structure according to claim 4, wherein a closely attached area between the sidewall surface of the annular groove on the low-pressure side and the first sealing ring is greater than a sliding area between the inner circumferential surface of the shaft hole and the first sealing ring.

6. The sealing structure according to claim 4 or 5, wherein the side surface of the first sealing ring on the high-pressure side includes the inclined surface provided on a radially inner side and an outer circumferential surface-side inclined surface which is provided on a radially outer side and increased in diameter toward the low-pressure side from the high-pressure side.
